# EUROPEAN PATENT APPLICATION

(11) **EP 4 596 292 A1**
(43) Date of publication of application: **06.08.2025**
(21) Application number: 24207043.1
(22) Date of filing: 16.10.2024
(51) Int. Cl.: B60K 35/22, B60K 35/28, B60K 35/81, G06V 20/56

(54) **IN-VEHICLE DISPLAY SYSTEM AND DISPLAY METHOD OF INVEHICLE DISPLAY SYSTEM**

(30) Priority: 31.01.2024 JP 2024012820
(71) Applicant: TOYOTA JIDOSHA KABUSHIKI KAISHA, Aichi-ken, 471-8571 (JP)
(72) Inventor: ITO, Hironori, Tokyo, 103-0022 (JP)
(74) Representative: D Young & Co LLP

(57) **Abstract**

The in-vehicle display system includes a lane line recognition unit configured to recognize a lane line of a traveling lane of the host vehicle based on a detection result of a camera of the host vehicle, a road edge structure recognition unit configured to recognize a road edge structure positioned outside the lane line based on a detection result of a sensor of the host vehicle, and a display control unit configured to control a display of the in-vehicle display based on recognition results of the lane line recognition unit and the road edge structure recognition unit. The display control unit is configured to display a road edge structure icon corresponding to the road edge structure on the in-vehicle display when the lane line is not recognized and the road edge structure is recognized.

## Description

### CROSS-REFERENCE TO RELATED APPLICATIONS

This application is based upon and claims the benefit of priority from Japanese Patent Application No. 2024-012820, filed on January 31, 2024, the entire contents of which are incorporated herein by reference.

### TECHNICAL FIELD

The present disclosure relates to an in-vehicle display system and a display method of an in-vehicle display system.

### BACKGROUND

As a technical document related to an in-vehicle display system, Japanese Unexamined Patent Application Publication No. 2018-173834 is known. Japanese Unexamined Patent Application Publication No. 2018-173834 discloses a technology for conveying the range of a traveling lane to a driver by displaying the detection result of the lane line of the traveling lane on the display screen of the host vehicle.

### SUMMARY

However, there are cases where the detection result of a road edge structure positioned outside the lane line is displayed on the display screen of the host vehicle. In such cases, if the detection of the road edge structure becomes unstable, the road edge structure is intermittently displayed on the display screen, which may cause the driver to feel annoyed.

The present disclosure aims to provide a in-vehicle display system and a display method that can reduce the annoyance of the driver.

An aspect of the present disclosure is an in-vehicle display system mounted on a host vehicle and configured to display a situation around the host vehicle on an in-vehicle display. The in-vehicle display system includes a lane line recognition unit configured to recognize a lane line of a traveling lane of the host vehicle based on a detection result of a camera of the host vehicle, a road edge structure recognition unit configured to recognize a road edge structure positioned outside the lane line based on a detection result of a sensor of the host vehicle, and a display control unit configured to control a display of the in-vehicle display based on recognition results of the lane line recognition unit and the road edge structure recognition unit. The display control unit is configured to display a road edge structure icon corresponding to the road edge structure on the in-vehicle display when the lane line is not recognized and the road edge structure is recognized. When the lane line is recognized, even if the road edge structure is recognized, the display control unit is configured to display a lane line icon corresponding to the lane line and not to display the road edge structure icon.

In this in-vehicle display system, the display control unit is configured to display the road edge structure icon on the in-vehicle display when the lane line is not recognized and the road edge structure is recognized. On the other hand, when the lane line is recognized, the display control unit is configured to display the lane line icon and not to display the road edge structure icon even if the road edge structure is recognized. As a result, when both the road edge structure and the lane line are recognized, the road edge structure icon is not displayed, thereby reducing the annoyance of the driver caused by the intermittent display of the road edge structure icon. Therefore, according to this in-vehicle display system, the annoyance of the driver can be reduced.

The in-vehicle display system may further include a pavement edge recognition unit configured to recognize a pavement edge of a road positioned on either the left or right side of the host vehicle based on a detection result of the sensor of the host vehicle. The display control unit may be configured to display a pavement edge icon corresponding to the pavement edge on the in-vehicle display when the lane line is not recognized and the pavement edge is recognized. The display control unit may be configured to display the lane line icon and not to display the pavement edge icon on the in-vehicle display when the lane line is recognized even if the pavement edge is recognized.

The display control unit may be configured to display the pavement edge icon and not to display the road edge structure icon on the in-vehicle display when the lane line is not recognized and both the road edge structure and the pavement edge are recognized.

Another aspect of the present disclosure is a display method of an in-vehicle display system mounted on a host vehicle and configured to display a situation around the host vehicle on an in-vehicle display. The display method of the in-vehicle display system includes a lane line recognition step of recognizing a lane line of a traveling lane of the host vehicle based on a detection result of a camera of the host vehicle, a road edge structure recognition step of recognizing a road edge structure positioned outside the lane line based on a detection result of a sensor of the host vehicle, and a display control step of controlling a display of the in-vehicle display based on recognition results of the lane line recognition step and the road edge structure recognition step. In the display control step, a road edge structure icon corresponding to the road edge structure is displayed on the in-vehicle display when the lane line is not recognized and the road edge structure is recognized. In the display control step, a lane line icon corresponding to the lane line is displayed and the road edge structure icon is not displayed on the in-vehicle display when the lane line is recognized even if the road edge structure is recognized.

In the display control step of this display method, the road edge structure icon is displayed on the in-vehicle display when the lane line is not recognized and the road edge structure is recognized. On the other hand, when the lane line is recognized, the lane line icon is displayed and the road edge structure icon is not displayed on the in-vehicle display even if the road edge structure is recognized. As a result, when both the road edge structure and the lane line are recognized, the road edge structure icon is not displayed, thereby reducing the annoyance of the driver caused by the intermittent display of the road edge structure icon. Therefore, according to this display method, the annoyance of the driver can be reduced.

Another aspect of the present disclosure is an in-vehicle display system mounted on a host vehicle and configured to display a situation around the host vehicle on an in-vehicle display. The in-vehicle display system includes a road edge structure recognition unit configured to recognize a road edge structure positioned on either the left or right side of the host vehicle based on a detection result of a sensor of the host vehicle, and a display control unit configured to control a display of the in-vehicle display based on a recognition result of the road edge structure recognition unit. The road edge structure includes at least two of a guardrail, a wall, and a curb. The display control unit is configured to display a road edge structure icon corresponding to a road edge structure closest to the host vehicle among the recognized multiple types of road edge structures on the in-vehicle display and not to display road edge structure icons corresponding to the remaining road edge structures on the in-vehicle display when multiple types of road edge structures are recognized on either the left or right side of the host vehicle.

In this in-vehicle display system, the display control unit is configured to display the road edge structure icon corresponding to the road edge structure closest to the host vehicle among the recognized multiple types of road edge structures on the in-vehicle display. On the other hand, the display control unit is configured not to display the road edge structure icons corresponding to the remaining road edge structures on the in-vehicle display. As a result, only the road edge structure icon corresponding to the road edge structure closest to the host vehicle is displayed, thereby reducing the annoyance of the driver caused by the intermittent display of the road edge structure icons corresponding to the remaining road edge structures. Therefore, according to this in-vehicle display system, the annoyance of the driver can be reduced.

The display control unit may be configured to display a road edge structure icon corresponding to a road edge structure next closest to the host vehicle among the recognized multiple types of road edge structures on the in-vehicle display when the closest road edge structure to the host vehicle is lost on either side of the host vehicle.

The above in-vehicle display system may further include a pavement edge recognition unit configured to recognize a pavement edge of a road positioned on either the left or right side of the host vehicle based on a detection result of the sensor of the host vehicle. The display control unit may be configured to display a pavement edge icon corresponding to the pavement edge on the in-vehicle display and not to display the road edge structure icon when the pavement edge is recognized.

According to the present disclosure, it is possible to provide an in-vehicle display system and a display method that can reduce the annoyance of the driver.

### BRIEF DESCRIPTION OF THE DRAWINGS

FIG. 1 is a block diagram showing a functional configuration of an in-vehicle display system according to an embodiment.
FIG. 2 is a perspective view showing an example of a situation around a host vehicle.
FIG. 3 is a diagram showing an example of a display screen of the in-vehicle display shown in FIG. 1.
FIG. 4 is a diagram showing an example of a display screen of the in-vehicle display shown in FIG. 1.
FIG. 5 is a diagram showing an example of a display screen of the in-vehicle display shown in FIG. 1.
FIG. 6 is a diagram showing an example of a display screen of the in-vehicle display shown in FIG. 1.
FIG. 7 is a diagram showing an example of a display screen of the in-vehicle display shown in FIG. 1.
FIG. 8 is a diagram showing an example of a display screen of the in-vehicle display shown in FIG. 1.
FIG. 9 is a flowchart showing an example of a display method using the in-vehicle display system.
FIG. 10 is a flowchart showing details of the display control step shown in FIG. 9.

### DETAILED DESCRIPTION

Hereinafter, embodiments of the present disclosure will be described in detail with reference to the drawings.

### [Configuration of the In-vehicle display system]

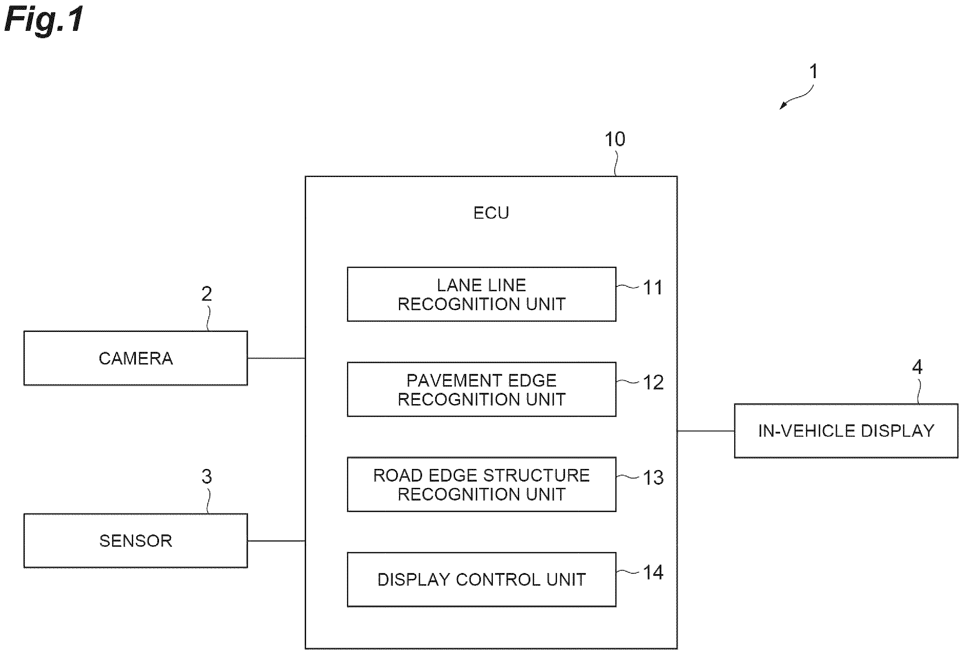

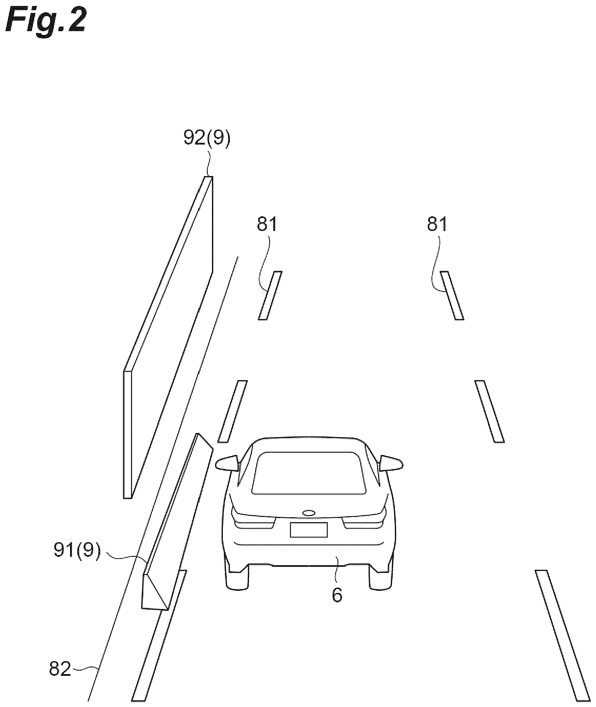

FIG. 1 is a block diagram showing a functional configuration of an in-vehicle display system according to an embodiment. The in-vehicle display system 1 shown in FIG. 1 is a system mounted on a vehicle and configured to display a situation around the vehicle on an in-vehicle display. Hereinafter, the vehicle on which the in-vehicle display system 1 is mounted is referred to as the host vehicle. The in-vehicle display system 1 is mounted, for example, on an autonomous driving vehicle or a driver assistance vehicle. As shown in FIG. 1, the in-vehicle display system 1 includes a camera 2, a sensor 3, a display 4, and an Electronic Control Unit (ECU) 10. FIG. 2 shows the host vehicle 6.

The camera 2 shown in FIG. 1 is an imaging device that captures an external situation of the host vehicle 6. The camera 2 is mounted on the host vehicle 6. The camera 2 includes, for example, a front camera that captures the front of the host vehicle 6, a rear camera that captures the rear of the host vehicle 6, and side cameras that capture the left and right sides of the host vehicle 6. Each camera may be a monocular camera or a stereo camera. The stereo camera has two imaging units arranged to reproduce binocular parallax. The imaging information of the stereo camera includes information in the depth direction. The camera 2 transmits captured images related to the external situation of the host vehicle 6 to the ECU 10.

The sensor 3 is a detection device that detects an external situation of the host vehicle 6. The sensor 3 is mounted on the host vehicle 6. The sensor 3 is, for example, a radar sensor. The radar sensor is a detection device that detects objects around the host vehicle using radio waves (e.g., millimeter waves) or light. The radar sensor can be, for example, a millimeter wave radar or a LiDAR (Light Detection and Ranging). The sensor 3 transmits information related to the external situation of the host vehicle 6 to the ECU 10.

The ECU 10 is an electronic control unit having a Central Processing Unit (CPU) and a storage unit such as a Read Only Memory (ROM) or a Random Access Memory (RAM). In the ECU 10, various functions are realized by executing a program stored in the storage unit on the CPU. The ECU 10 is provided, for example, in the host vehicle 6.

The in-vehicle display 4 is mounted in the cabin of the host vehicle 6. The in-vehicle display 4 is, for example, a center display mounted on the dashboard of the host vehicle 6. The in-vehicle display 4 may be a display of a tablet-type computer that can be installed in the host vehicle 6, or a Head Up Display (HUD). The in-vehicle display system 1 displays a situation around the host vehicle 6 on the in-vehicle display 4. The in-vehicle display 4 displays predetermined information based on a control signal transmitted from the ECU 10. The predetermined information includes, for example, icons corresponding to various objects around the host vehicle 6.

FIG. 2 is a perspective view showing an example of a situation around the host vehicle. As shown in FIG. 2, there may be a lane line 81, a pavement edge 82, and a road edge structure 9 around the host vehicle 6. In the present embodiment, the lane line 81 is a lane line of the traveling lane of the host vehicle 6. In the present embodiment, the pavement edge 82 is an edge of a paved road on which the host vehicle 6 travels. The pavement edge 82 is positioned on either the left or right side of the host vehicle 6. The pavement edge 82 is a boundary between the paved road and the soil or the like outside the paved road. The lane line 81 is positioned inside the pavement edge 82 on the paved road.

The road edge structure 9 includes, for example, a first road edge structure 91 and a second road edge structure 92. The road edge structure 9 is, for example, a structure protruding from the ground or a structure provided at a position higher than the ground. The first road edge structure 91 is, for example, a curb or the like. The second road edge structure 92 is, for example, a wall or the like. The road edge structure 9 may also be a cone or construction sign placed on the ground. The first road edge structure 91 is positioned on either the left or right side of the host vehicle 6. The first road edge structure 91 is positioned outside the lane line 81. Outside the lane line means the side opposite to the traveling lane with respect to the inner edge of the lane line. The outside of the lane line includes the area on the opposite side of the traveling lane with respect to the outer edge of the lane line. In the present embodiment, the first road edge structure 91 partially overlaps with the lane line 81 on the outside of the inner edge of the lane line 81 when viewed from a vertical direction. In the present embodiment, the first road edge structure 91 is positioned inside the pavement edge 82.

The second road edge structure 92 is positioned on either the left or right side of the host vehicle 6. The second road edge structure 92 is positioned outside the lane line 81. In the present embodiment, the second road edge structure 92 is positioned outside the pavement edge 82. The in-vehicle display system 1 displays icons corresponding to the host vehicle 6, the lane line 81, the pavement edge 82, or the road edge structure 9 on the display screen of the in-vehicle display 4.

The ECU 10 includes, as a functional configuration, a lane line recognition unit 11, a pavement edge recognition unit 12, a road edge structure recognition unit 13, and a display control unit 14.

The lane line recognition unit 11 recognizes the lane line 81 of the traveling lane of the host vehicle 6 based on the detection result (image data) of the camera 2 of the host vehicle 6. Specifically, the lane line recognition unit 11 recognizes the lane line 81 using well-known image processing techniques such as edge extraction, noise removal, pattern matching, and deep learning.

The pavement edge recognition unit 12 recognizes the pavement edge 82 based on the detection result of the sensor 3 of the host vehicle 6. The pavement edge recognition unit 12 may recognize the pavement edge 82 based on the detection results of both the sensor 3 and the camera 2. The road edge structure recognition unit 13 recognizes the road edge structure 9 based on the detection result of the sensor 3 of the host vehicle 6. The road edge structure recognition unit 13 may recognize the road edge structure 9 based on the detection results of both the sensor 3 and the camera 2.

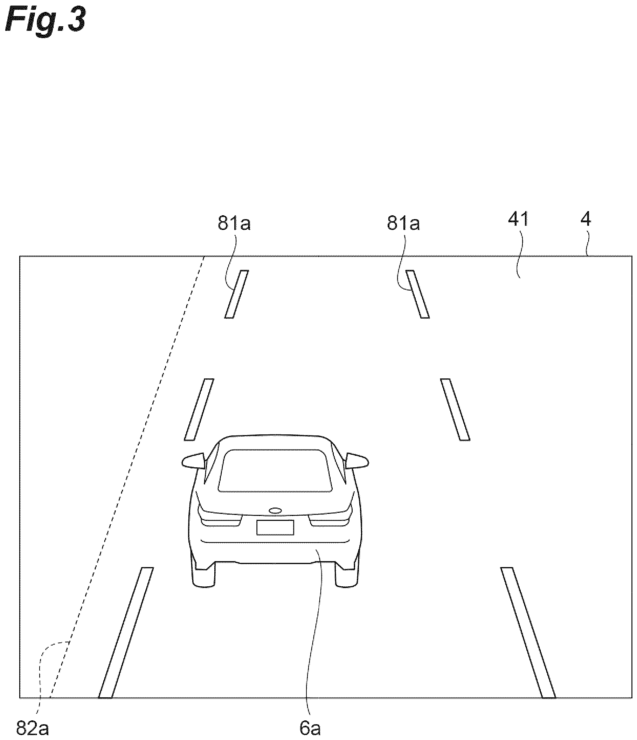

The display control unit 14 controls the display of the in-vehicle display 4 based on the recognition results of the lane line recognition unit 11, the pavement edge recognition unit 12, and the road edge structure recognition unit 13. FIGS. 3 to 8 each show an example of a display screen of the in-vehicle display 4. In FIGS. 3 to 8, the information displayed on the display screen 41 of the in-vehicle display 4 is represented by solid lines, and the information not displayed on the display screen 41 of the in-vehicle display 4 is represented by dashed lines.

The display control unit 14 displays at least one of a lane line icon 81a corresponding to the lane line 81, a pavement edge icon 82a corresponding to the pavement edge 82, a first road edge structure icon 91a corresponding to the first road edge structure 91, and a second road edge structure icon 92a corresponding to the second road edge structure 92 on the display screen 41 of the in-vehicle display 4.

As shown in FIG. 3, when the lane line 81 is recognized by the lane line recognition unit 11, the display control unit 14 displays the lane line icon 81a on the display screen 41 of the in-vehicle display 4. When the lane line 81 is recognized, the display control unit 14 displays the lane line icon 81a and does not display the pavement edge icon 82a on the display screen 41 of in-vehicle display 4 even if the pavement edge 82 is recognized by the pavement edge recognition unit 12.

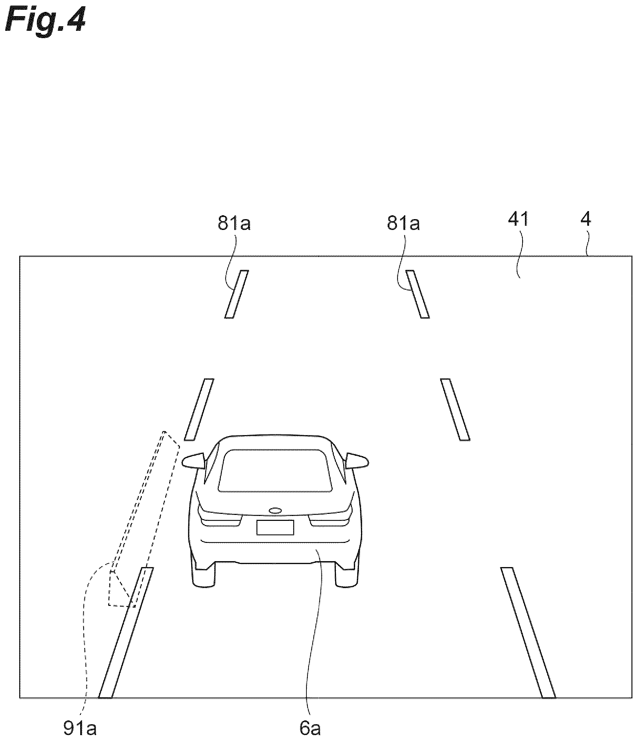

As shown in FIG. 4, when the lane line 81 is recognized by the lane line recognition unit 11, the display control unit 14 does not display the first road edge structure icon 91a even if the first road edge structure 91 is recognized by the road edge structure recognition unit 13. In this case, the display control unit 14 displays the lane line icon 81a on the display screen 41 of the in-vehicle display 4. Similarly, when the lane line 81 is recognized by the lane line recognition unit 11, the display control unit 14 does not display the second road edge structure icon 92a even if the second road edge structure 92 is recognized. In this case as well, the display control unit 14 displays the lane line icon 81a on the display screen 41 of the in-vehicle display 4.

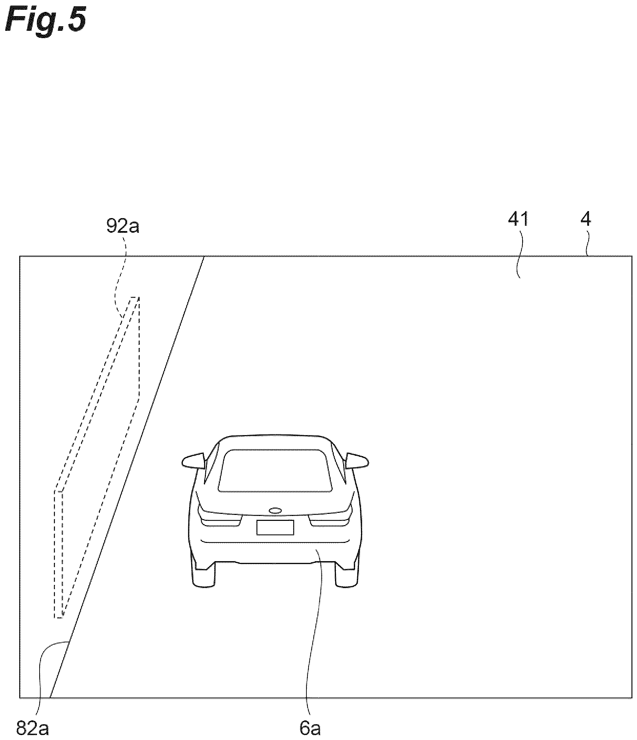

As shown in FIG. 5, when the lane line 81 is not recognized and both the pavement edge 82 and the second road edge structure 92 are recognized, the display control unit 14 does not display the second road edge structure icon 92a. The display control unit 14 displays the pavement edge icon 82a on the display screen 41 of the in-vehicle display 4. the display control unit 14 may not display the pavement edge icon 82a when the lane line 81 is not recognized and both the pavement edge 82 and the first road edge structure 91 are recognized. In this case, the display control unit 14 displays the first road edge structure icon 9 1a on the display screen 41 of the in-vehicle display 4. The display control unit 14 may display either the pavement edge 82 or the road edge structure 9 closest to the host vehicle 6 on the display screen 41 of the in-vehicle display 4.

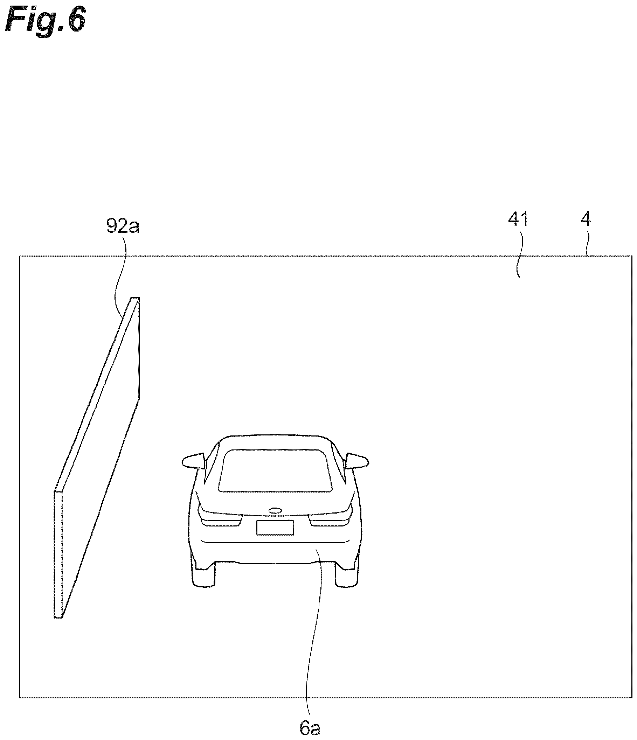

As shown in FIG. 6, when neither the lane line 81 nor the pavement edge 82 is recognized and the second road edge structure 92 is recognized, the display control unit 14 displays the second road edge structure icon 92a on the display screen 41 of the in-vehicle display 4. Similarly, when neither the lane line 81 nor the pavement edge 82 is recognized and the first road edge structure 91 is recognized, the display control unit 14 displays the first road edge structure icon 91a on the display screen 41 of the in-vehicle display 4.

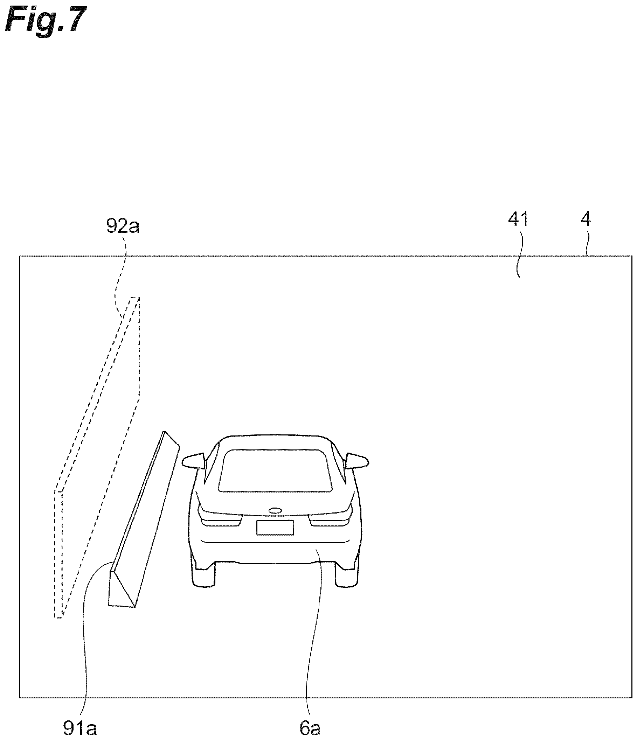

As shown in FIG. 7, when both the first road edge structure 91 and the second road edge structure 92 are recognized as multiple types of road edge structures on either the left or right side of the host vehicle 6, the display control unit 14 displays the first road edge structure icon 91a corresponding to the first road edge structure 91 closest to the host vehicle 6 on the display screen 41 of the in-vehicle display 4. The display control unit 14 does not display the second road edge structure icon 92a corresponding to the second road edge structure 92 on the display screen 41 of the in-vehicle display 4. Even when a third road edge structure is recognized outside the second road edge structure 92, the display control unit 14 displays the first road edge structure icon 91a corresponding to the first road edge structure 91 closest to the host vehicle 6 on the display screen 41 of the in-vehicle display 4. The display control unit 14 does not display the second road edge structure icon 92a corresponding to the second road edge structure 92 and the third road edge structure icon corresponding to the third road edge structure on the display screen 41 of the in-vehicle display 4.

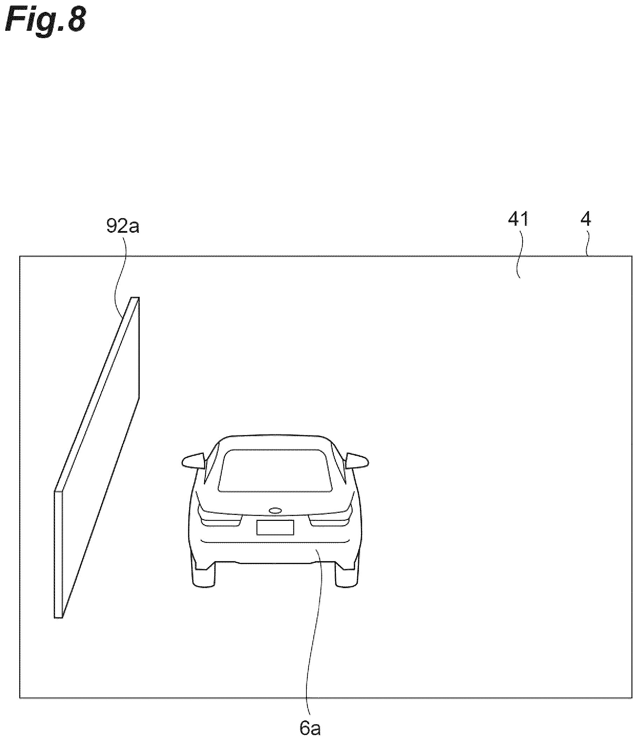

FIG. 8 shows a case where either the first road edge structure 91 or the second road edge structure 92 are recognized as multiple types of road edge structures on either the left or right side of the host vehicle 16. In this case, when the first road edge structure 91 closest to the host vehicle 6 is lost, the display control unit 14 displays the second road edge structure icon 92a corresponding to the second road edge structure 92 next closest to the host vehicle 6 among the multiple types of road edge structures on the display screen 41 of the in-vehicle display 4. The display control unit 14 displays the road edge structure 9 closest to the host vehicle 6 among the road edge structures 9 recognized by the road edge structure recognition unit 13 on the display screen 41 of the in-vehicle display 4.

### [Display Method of In-vehicle display system]

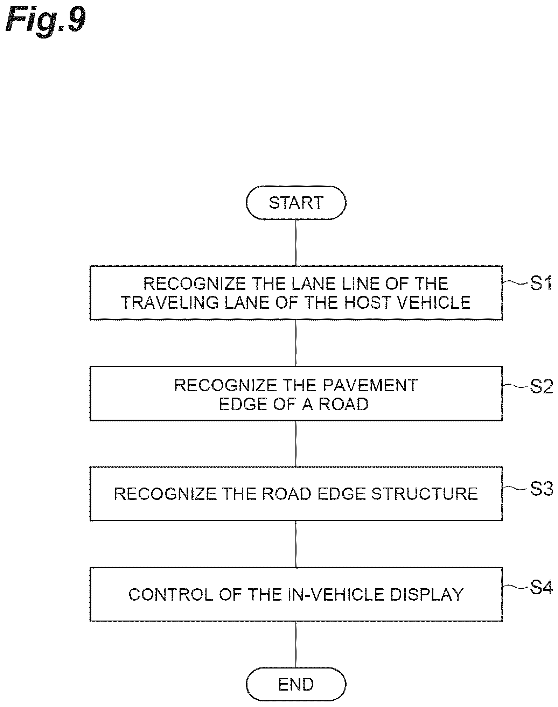

Next, an example of the display method of the in-vehicle display system 1 will be described with reference to the drawings. FIG. 9 is a flowchart showing an example of the display method using the in-vehicle display system. As shown in FIG. 9, in step S1, the ECU 10 recognizes the lane line 81 of the traveling lane of the host vehicle 6 based on the detection result of the camera 2 of the host vehicle 6. Step S1 corresponds to the lane line recognition step. In step S2, the ECU 10 recognizes the pavement edge 82 positioned on either the left or right side of the host vehicle 6 based on the detection result of the sensor 3 of the host vehicle 6. Step S2 corresponds to the pavement edge recognition step. In step S3, the ECU 10 recognizes the second road edge structure 92 positioned outside the lane line 81 based on the detection result of the sensor 3 of the host vehicle 6. Step S3 corresponds to the road edge structure recognition step. In step S4, the ECU 10 controls the display of the in-vehicle display 4 based on the recognition results of steps S1 to S3. Step S4 corresponds to the display control step. Steps S1 to S3 may be executed in any order or simultaneously.

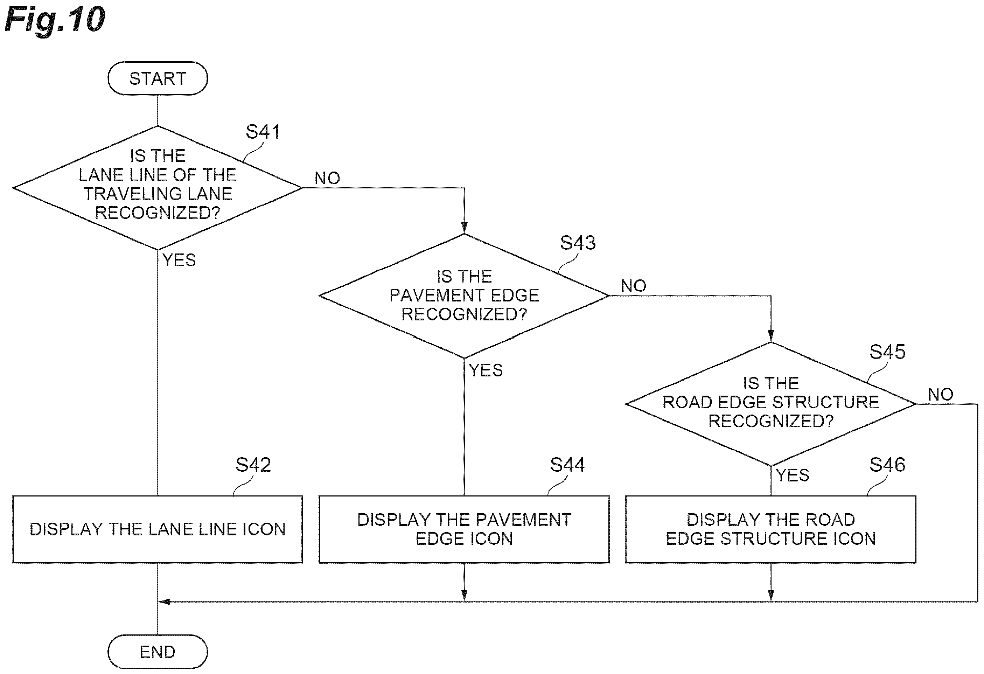

FIG. 10 is a flowchart showing details of step S4 shown in FIG. 9. As shown in FIG. 10, in step S41, the ECU 10 determines whether the lane line 81 of the traveling lane of the host vehicle 6 is recognized. The ECU 10 proceeds to step S42 if the lane line 81 is recognized (step S41: YES). In step S42, the ECU 10 displays the lane line icon 81a on the in-vehicle display 4.

If the lane line 81 is recognized, the ECU 10 does not display the pavement edge icon 82a, the first road edge structure icon 91a, or the second road edge structure icon 92a even if the pavement edge 82, the first road edge structure 91, or the second road edge structure 92 is recognized. The ECU 10 displays the lane line icon 81a on the in-vehicle display 4. If the lane line 81 is not recognized (step S41: NO), the process proceeds to step S43. The ECU 10 determines whether the pavement edge 82 is recognized. If the pavement edge 82 is recognized (step S43: YES), the ECU 10 proceeds to step S44. In step S44, the ECU 10 displays the pavement edge icon 82a on the in-vehicle display 4.

If the lane line 81 is not recognized and the pavement edge 82 is recognized, the ECU 10 does not display the first road edge structure icon 91a or the second road edge structure icon 92a even if the first road edge structure 91 or the second road edge structure 92 is recognized. The ECU 10 displays the pavement edge icon 82a on the in-vehicle display 4.

If neither the lane line 81 nor the pavement edge 82 is recognized (step S43: NO), the ECU 10 proceeds to step S45.The ECU 10 determines whether the first road edge structure 91 or the second road edge structure 92 is recognized. If the first road edge structure 91 or the second road edge structure 92 is recognized (step S45: YES), the ECU 10 proceeds to step S46. In step S46, the ECU 10 displays the first road edge structure icon 91a or the second road edge structure icon 92a on the in-vehicle display 4. If both the first road edge structure 91 and the second road edge structure 92 are recognized, the ECU 10 displays the first road edge structure icon 91a corresponding to the first road edge structure 91 closest to the host vehicle 6 on the in-vehicle display 4. If the road edge structure 9 is not recognized (step S45: NO), the process ends.

As described above, in the in-vehicle display system 1, the display control unit 14 displays the road edge structure 9 on the in-vehicle display 4 when the lane line 81 is not recognized and the road edge structure 9 is recognized. On the other hand, when the lane line 81 is recognized, the display control unit 14 does not display the road edge structure icon (the first road edge structure icon 91a or the second road edge structure icon 92a) even if the road edge structure 9 is recognized. As a result, when both the road edge structure 9 and the lane line 81 are recognized, the road edge structure icon is not displayed, thereby reducing the annoyance of the driver caused by the intermittent display of the road edge structure icon. The intermittent display of the road edge structure icon refers to a display state in which the road edge structure icon appears and disappears according to the detection status of the road edge structure. Therefore, according to the in-vehicle display system 1, the annoyance of the driver can be reduced.

The display control unit 14 displays the pavement edge icon 82a on the in-vehicle display 4 when the lane line 81 is not recognized and the pavement edge 82 is recognized. When the lane line 81 is recognized, the display control unit 14 does not display the pavement edge icon 82a even if the pavement edge 82 is recognized. As a result, when both the pavement edge 82 and the lane line 81 are recognized, the pavement edge icon 82a is not displayed, thereby reducing the annoyance of the driver caused by the intermittent display of the pavement edge icon.

The display control unit 14 does not display the road edge structure icon when both the road edge structure 9 and the pavement edge 82 are recognized and the lane line 81 is not recognized. The road edge structure icon includes the first road edge structure icon 91a or the second road edge structure icon 92a. As a result, the annoyance of the driver caused by the intermittent display of the road edge structure icon is reduced.

In step S4 (display control step) of the display method of the present embodiment, the display control unit 14 displays the road edge structure icon on the in-vehicle display 4 when the lane line 81 is not recognized and the road edge structure 9 is recognized. On the other hand, when the lane line 81 is recognized, the display control unit 14 displays the lane line icon 81a and does not display the road edge structure icon on in-vehicle display 4 even if the road edge structure 9 is recognized. As a result, when both the road edge structure 9 and the lane line 81 are recognized, the road edge structure icon is not displayed, thereby reducing the annoyance of the driver caused by the intermittent display of the road edge structure icon. Therefore, according to this display method, the annoyance of the driver can be reduced.

In the in-vehicle display system 1, the display control unit 14 displays the first road edge structure icon 91a corresponding to the first road edge structure 91 closest to the host vehicle 6 in the event that multiple types of road edge structures 9 are recognized. The display control unit 14 does not display the second road edge structure icon 92a corresponding to the second road edge structure 92. As a result, only the first road edge structure icon 91a corresponding to the first road edge structure 91 closest to the host vehicle 6 is displayed, thereby reducing the annoyance of the driver caused by the intermittent display of the second road edge structure icon 92a corresponding to the second road edge structure 92. Therefore, according to this in-vehicle display system, the annoyance of the driver can be reduced.

The display control unit 14 displays the second road edge structure icon 92a on the in-vehicle display 4 when multiple types of road edge structures 9 are recognized on either the left or right side of the host vehicle 6 and the first road edge structure 91 closest to the host vehicle 6 is lost. The second road edge structure icon 92a corresponds to the second road edge structure 92 next closest to the host vehicle 6 among the multiple types of road edge structures 9. As a result, the annoyance of the driver caused by the intermittent display of the second road edge structure icon 92a corresponding to the second road edge structure 92 is reduced.

The display control unit 14 may display the pavement edge icon 82a corresponding to the pavement edge 82 on the in-vehicle display 4 when the pavement edge 82 is recognized. In this case, the display control unit 14 may not display the first road edge structure icon 91a and the second road edge structure icon 92a. As a result, the annoyance of the driver caused by the intermittent display of the first road edge structure icon 91a or the second road edge structure icon 92a is reduced.

Although an embodiment of the present disclosure has been described above, the present disclosure is not limited to the above-described embodiment. It is to be understood that not all aspects, advantages, and features described herein may necessarily be achieved by, or included in, any one particular example. Indeed, having described and illustrated various examples herein, it should be apparent that other examples may be modified in arrangement and detail.

The first road edge structure 91 or the second road edge structure 92 may be, for example, a guardrail or the like.

The in-vehicle display system 1 may not include the pavement edge recognition unit 12. In this case, the display control unit 14 may display the first road edge structure icon 91a or the second road edge structure icon 92a on the in-vehicle display 4 when the lane line 81 is not recognized and the first road edge structure 91 or the second road edge structure 92 is recognized.

The in-vehicle display system 1 may not include the lane line recognition unit 11. The in-vehicle display system 1 may perform independent processing for the right side and the left side of the host vehicle M. When the in-vehicle display system 1 recognizes the lane line on the left side of the host vehicle, it does not display the left-side road edge structure icon on the in-vehicle display 4 even if it recognizes the road edge structure on the left side of the host vehicle. In this case, when the in-vehicle display system 1 does not recognize the lane line on the right side of the host vehicle and recognizes the road edge structure on the right side of the host vehicle, it displays the right-side road edge structure icon on the in-vehicle display 4. The same applies to other processes.

## Claims

1. An in-vehicle display system (1) mounted on a host vehicle (6) and configured to display a situation around the host vehicle (6) on an in-vehicle display (4), comprising:
a lane line recognition unit (11) configured to recognize a lane line of a traveling lane of the host vehicle (6) based on a detection result of a camera of the host vehicle (6);
a road edge structure recognition unit (13) configured to recognize a road edge structure positioned outside the traveling line based on a detection result of a sensor of the host vehicle (6); and
a display control unit (14) configured to control a display of the in-vehicle display (4) based on recognition results of the lane line recognition unit (11) and the road edge structure recognition unit (13),
wherein the display control unit (14) is configured to display a road edge structure icon (9) corresponding to the road edge structure on the in-vehicle display (4) when the lane line is not recognized and the road edge structure is recognized, and to display a lane line icon corresponding to the lane line and not to display the road edge structure icon (9) on the in-vehicle display (4) when the lane line is recognized even if the road edge structure is recognized.

2. The in-vehicle display system (1) according to claim 1, further comprising a pavement edge recognition unit (12) configured to recognize a pavement edge of a road positioned on either the left or right side of the host vehicle (6) based on a detection result of the sensor of the host vehicle (6),
wherein the display control unit (14) is configured to display a pavement edge icon corresponding to the pavement edge on the in-vehicle display (4) when the lane line is not recognized and the pavement edge is recognized, and to display the lane line icon and not to display the pavement edge icon on the in-vehicle display (4) when the lane line is recognized even when the pavement edge is recognized.

3. The in-vehicle display system (1) according to claim 2,
wherein the display control unit (14) is configured to display the pavement edge icon (82a) and not to display the road edge structure icons (9) on the in-vehicle display (4) when the lane line is not recognized and both the road edge structure and the pavement edge are recognized.

4. A display method of a display system mounted on a host vehicle (6) and configured to display a situation around the host vehicle (6) on an in-vehicle display (4), comprising:
a lane line recognition step of recognizing a lane line of a traveling lane of the host vehicle (6) based on a detection result of a camera of the host vehicle (6);
a road edge structure recognition step of recognizing a road edge structure positioned outside the traveling line based on a detection result of a sensor of the host vehicle (6); and
a display control step of controlling a display of the in-vehicle display (4) based on recognition results of the lane line recognition step and the road edge structure recognition step,
wherein in the display control step, a road edge structure icon (9) corresponding to the road edge structure is displayed on the in-vehicle display (4) when the lane line is not recognized and the road edge structure is recognized, and a lane line icon corresponding to the lane line is displayed and the road edge structure icon (9) is not displayed on the in-vehicle display (4) when the lane line is recognized even if the road edge structure is recognized.

5. An in-vehicle display system (1) mounted on a host vehicle (6) and configured to display a situation around the host vehicle (6) on an in-vehicle display (4), comprising:
a road edge structure recognition unit (13) configured to recognize a road edge structure positioned on either the left or right side of the host vehicle (6) based on a detection result of a sensor of the host vehicle (6); and
a display control unit (14) configured to control a display of the in-vehicle display (4) based on a recognition result of the road edge structure recognition unit (13),
wherein the road edge structure includes at least two of a guardrail, a wall, and a curb,
wherein the display control unit (14) is configured to display a road edge structure icon (9) corresponding to a road edge structure closest to the host vehicle (6) among the recognized multiple types of road edge structures on the in-vehicle display (4) and not to display road edge structure icons (9) corresponding to the remaining road edge structures on the in-vehicle display (4) when multiple types of road edge structures are recognized on either the left or right side of the host vehicle (6).

6. The in-vehicle display system (1) according to claim 5,
wherein the display control unit (14) is configured to display a road edge structure icon (9) corresponding to a road edge structure next closest to the host vehicle (6) among the recognized multiple types of road edge structures on the in-vehicle display (4) when the closest road edge structure to the host vehicle (6) is lost when multiple types of road edge structures are recognized on either the left or right side of the host vehicle (6).

7. The in-vehicle display system (1) according to claim 5, further comprising a pavement edge recognition unit (12) configured to recognize a pavement edge of a road positioned on either the left or right side of the host vehicle (6) based on a detection result of a sensor of the host vehicle (6),
wherein the display control unit (14) is configured to display a pavement edge icon corresponding to the pavement edge on the in-vehicle display (4) and not to display the road edge structure icon (9) when the pavement edge is recognized.
